# EUROPÄISCHE PATENTSCHRIFT

(11) **EP 2 293 899 B1**
(45) Veröffentlichungstag und Bekanntmachung des Hinweises auf die Patenterteilung: **21.09.2011**
(21) Anmeldenummer: 08773358.0
(22) Anmeldetag: 03.06.2008
(51) Int. Cl.: B23Q 11/08

(54) **VERFAHREN UND MASCHINELLE ANORDNUNG ZUM BEARBEITEN VON WERKSTÜCKEN, INSBESONDERE VON BLECHEN**
METHOD AND MACHINE ARRANGEMENT FOR PROCESSING WORKPIECES, IN PARTICULAR PIECES OF SHEET METAL
PROCÉDÉ ET ENSEMBLE MÉCANIQUE POUR USINER DES PIÈCES D'OEUVRE, EN PARTICULIER DES TÔLES

(43) Veröffentlichungstag der Anmeldung: 16.03.2011
(73) Patentinhaber: Trumpf Sachsen GmbH, 01904 Neukirch (DE); TRUMPF Werkzeugmaschinen GmbH + Co. KG, 71254 Ditzingen (DE)
(72) Erfinder: HULTSCH, Andreas, 01904 Neukirch (DE); MECK, Tobias, 70329 Stuttgart (DE); PETERA, Martin, 71065 Sindelfingen (DE); WAHL, Eberhard, 73235 Weilheim (DE)
(74) Vertreter: Kohler Schmid Möbus
(86) Internationale Anmeldenummer: PCT/EP2008/004403
(87) Internationale Veröffentlichungsnummer: WO 2009/146716

(56) Entgegenhaltungen:
- EP-A- 1 840 448
- WO-A-01/85389
- US-A- 4 162 647

## Beschreibung

Die Erfindung betrifft ein Verfahren zum Bearbeiten von Werkstücken, insbesondere von Blechen, mittels einer maschinellen Anordnung, im Rahmen dessen
- eine Bearbeitungseinrichtung der maschinellen Anordnung während einer Bearbeitungsphase unter sukzessivem Erstellen einer Mehrzahl von Bearbeitungsprodukten relativ zu dem oder den zu bearbeitenden Werkstücken bewegt wird und
- der Verlauf einer Arbeitsraumbegrenzung eines Arbeitsraumes der maschinellen Anordnung, in welchem die Bearbeitungseinrichtung während der Bearbeitungsphase angeordnet ist, während der Bearbeitungsphase abgestimmt auf die Bewegung der Bearbeitungseinrichtung verändert wird, indem eine als bewegliches Begrenzungselement der Arbeitsraumbegrenzung vorgesehene Rückwand der Arbeitsraumbegrenzung während der Bearbeitungsphase abgestimmt auf die Bewegung der Bearbeitungseinrichtung derart bewegt wird, dass während der Bearbeitungsphase wenigstens ein Bearbeitungsprodukt außerhalb des Arbeitsraumes zu liegen kommt,

Die Erfindung betrifft des Weiteren eine maschinelle Anordnung zur Durchführung eines Verfahrens der vorstehenden Art,
- mit einer Bearbeitungseinrichtung,
- mit einem Bearbeitungsantrieb, mittels dessen die Bearbeitungseinrichtung während einer Bearbeitungsphase unter sukzessivem Erstellen einer Mehrzahl von Bearbeitungsprodukten relativ zu dem oder den zu bearbeitenden Werkstücken bewegbar ist,
- mit einem Arbeitsraum, in welchem die Bearbeitungseinrichtung während der Bearbeitungsphase angeordnet ist sowie
- mit einer für den Arbeitsraum vorgesehenen Arbeitsraumbegrenzung, deren Verlauf während der Bearbeitungsphase abgestimmt auf die Bewegung der Bearbeitungseinrichtung veränderbar ist, indem eine als bewegliches Begrenzungselement der Arbeitsraumbegrenzung vorgesehene Rückwand der Arbeitsraumbegrenzung während der Bearbeitungsphase mittels eines gesteuerten Begrenzungsantriebes abgestimmt auf die Bewegung der Bearbeitungseinrichtung derart bewegbar ist, dass während der Bearbeitungsphase wenigstens ein Bearbeitungsprodukt außerhalb des Arbeitsraumes zu liegen kommt.

Die Erfindung betrifft schließlich auch ein Verfahren zum Erstellen eines numerischen Bearbeitungsprogrammes zur Durchführung des eingangs genannten Verfahrens, ein Computerprogramm-Produkt mit Programmcode-Mitteln zur Durchführung eines derartigen Programmierverfahrens sowie ein Computerprogramm-Produkt mit Programmcode-Mitteln zur Durchführung des Bearbeitungsverfahrens der eingangs genannten Art.

Gattungsgemäßer Stand der Technik ist bekannt aus EP 1 840 448 A1. Diese Druckschrift betrifft eine für die Bearbeitung von Werkstücken vorgesehene Maschine, die ein an einem Ausleger beweglich geführtes Bearbeitungsaggregat aufweist. Zu bearbeitende Werkstücke sind auf einem Aufspanntisch gelagert. Über den Aufspanntisch bewegt sich der Ausleger der Maschine in einer ersten Achsrichtung. Senkrecht dazu ist das Bearbeitungsaggregat an dem Ausleger in einer zweiten Achsrichtung beweglich geführt. Der Arbeitsbereich des Bearbeitungsaggregates wird durch eine vorhangartige Schutzkabine derart umschlossen, dass bei einer mittels des Bearbeitungsaggregats durchgeführten Werkstückbearbeitung ein von dem Arbeitsbereich des Bearbeitungsaggregates abliegender Bereich des Aufspanntisches freiliegt und folglich zum Be- und Entladen zugänglich ist. Ist die Werkstückbearbeitung im Inneren der Schutzkabine abgeschlossen, so wird diese mittels des Auslegers in eine neue Position umgesetzt, in welcher sie den bis dato freien Bereich des Aufspanntisches umschließt und dadurch einen neuen Arbeitsbereich für das Bearbeitungsaggregat begrenzt. Die Schutzkabine besitzt zu diesem Zweck in der Verfahrrichtung des Auslegers verlaufende und in dieser Richtung teleskopierbare Seitenwände. Quer zu den Seitenwänden verlaufen Stirnwände der Schutzkabine. Zum Umsetzen der Schutzkabine wird zunächst die in der Bewegungsrichtung des Auslegers vordere Stirnwand der Schutzkabine an dem Ausleger der Maschine festgelegt. Anschließend bewegt der Ausleger die vordere Stirnwand der Schutzkabine in ihre neue Position. Dabei werden die Seitenwände der Schutzkabine in Verfahrrichtung teleskopartig gelängt. Hat die vordere Stirnwand ihre neue Position erreicht, wird ihre Verbindung mit dem Ausleger gelöst und der Ausleger verfährt zu der rückwärtigen Stirnwand der Schutzkabine, die bei dem vorausgegangenen Umsetzen der vorderen Stirnwand ihre ursprüngliche Position beibehalten hat. Nach dem Ankuppeln an die hintere Stirnwand bewegt der Ausleger auch die hintere Stirnwand in ihre neue Position. Dabei werden die zuvor gelängten Seitenwände der Schutzkabine in der Bewegungsrichtung des Auslegers gestaucht.

Weiterer Stand der Technik ist offenbart in DE 100 25 354 A1. Im Falle des Standes der Technik wird eine mit einem Bearbeitungswerkzeug versehene Bearbeitungseinheit einer maschinellen Anordnung während einer Bearbeitungsphase über einen Werkstücktisch bewegt. Zu diesem Zweck ist die Bearbeitungseinheit an einem den Werkstücktisch überspannenden Querträger der maschinellen Anordnung in Querträger-Längsrichtung beweglich. Der Querträger seinerseits kann senkrecht zu seiner Längsrichtung verfahren. Bei der Bewegung der Bearbeitungseinheit über den Werkstücktisch wird ein auf diesem abgelegtes Werkstück mittels des Bearbeitungswerkzeuges bearbeitet. Ein Faltenbalg überdeckt den Werkstücktisch und definiert auf diese Art und Weise einen Arbeitsraum des Bearbeitungswerkzeuges. Mit einem Ende ist der Faltenbalg an den Querträger der maschinellen Anordnung angebunden. Das gegenüberliegende Ende des Faltenbalges ist an einer Führungsschiene befestigt, die ihrerseits einen Stellantrieb aufweist. Während der Bearbeitungsphase ist das mit der Führungsschiene versehene Ende des Faltenbalges ortsfest an einem Rand des Werkstücktisches angeordnet. Das gegenüberliegende Ende des Faltenbalges wird von dem Querträger mitgenommen, der während der Werkstückbearbeitung gemeinsam mit der an dem Querträger angebrachten Bearbeitungseinheit senkrecht zur Querträger-Längsrichtung verfährt. In Abhängigkeit von der Verfahrrichtung des Querträgers wird der Faltenbalg während der Bearbeitungsphase ausgezogen oder gestaucht. Vor Beginn einer Bearbeitungsphase wird das mit der Führungsschiene versehene Ende des Faltenbalges mit Hilfe des zugehörigen Stellantriebes von dem Rand des Werkstücktisches zurückgezogen. Der Werkstücktisch wird dadurch zugänglich und kann mit dem oder den zu bearbeitenden Werkstücken beladen werden. Nach dem Beladen des Werkstücktisches wird das mit der Führungsschiene versehene Ende des Faltenbalges mittels des Stellantriebes in seine Ausgangsposition an dem Rand des Werkstücktisches zurückbewegt. Dadurch wird der Arbeitsraum des Bearbeitungswerkzeuges wieder geschlossen. Es folgt dann die Bearbeitungsphase, während derer der Arbeitsraum des Bearbeitungswerkzeuges geschlossen bleibt. Geöffnet wird der Arbeitsraum des Bearbeitungswerkzeuges erst dann wieder, wenn die Bearbeitungsphase beendet ist. Dann wird das mit der Führungsschiene versehene Ende des Faltenbalges mittels des Stellantriebes erneut von dem Rand des Werkstücktisches wegbewegt. Dadurch wird der Werkstücktisch für den nun durchzuführenden Entladevorgang und gegebenenfalls auch für einen sich daran anschlie-βenden weiteren Beladevorgang zugänglich.

Ausgehend von dem gattungsgemäßen Stand der Technik besteht die Aufgabe der vorliegenden Erfindung darin, die Produktivität der Werkstückbearbeitung zu erhöhen.

Erfindungsgemäß gelöst wird diese Aufgabe durch das Verfahren nach Patentanspruch 1, durch die maschinelle Anordnung nach Patentanspruch 5, durch das Programmierverfahren nach Patentanspruch 14 sowie durch die Computerprogramm-Produkte nach den Patentansprüchen 16 und 17.

Der Verlauf der Arbeitsraumbegrenzung wird während der Bearbeitungsphase derart geändert, dass bereits während der Bearbeitungsphase Bearbeitungsprodukte außerhalb des Arbeitsraumes der maschinellen Anordnung zu liegen kommen. Die sich damit ergebende hauptzeitparallele Zugänglichkeit von Bearbeitungsprodukten kann insbesondere für einen Entladevorgang genutzt werden. In diesem Fall besteht die Möglichkeit, einen mehr oder weniger großen Teil der Bearbeitungsprodukte bereits vor Beendigung der Bearbeitungsphase aus dem Nahbereich der Bearbeitungseinrichtung abzuführen. Der nach Beendigung der Bearbeitungsphase durchzuführende Entladevorgang beschränkt sich dann auf eine verhältnismäßig kleine Anzahl von Bearbeitungsprodukten und kann folglich relativ schnell abgeschlossen werden. Damit kann bereits kurze Zeit nach Beendigung einer Bearbeitungsphase die nächste Bearbeitungsphase eingeleitet werden. Für die Bearbeitungseinrichtung ergibt sich dadurch ein hoher Auslastungsgrad. Dies wiederum bedingt eine hohe Produktivität der maschinellen Anordnung insgesamt.

Der Umstand, dass die Bearbeitungseinrichtung und die Rückwand der Arbeitsraumbegrenzung voneinander entkoppelt bewegbar sind, ermöglicht eine besonders große Flexibilität bei der gegenseitigen Abstimmung der Bewegung der Bearbeitungseinrichtung einerseits und der Bewegung der Arbeitsraumbegrenzung andererseits.

Als hauptzeitparallel zugängliche Bearbeitungsprodukte kommen insbesondere einzelne Fertigteile oder Abfallteile in Frage. Speziell bei schneidender Werkstückbearbeitung sind als Bearbeitungsprodukte beispielsweise auch von einem verbleibenden Restwerkstück abgetrennte Werkstückteile denkbar, an denen noch abschließend zu trennende Fertigteile über Micro-Joint-Verbindungen an einer Restgitterstruktur gehalten werden. Bei entsprechendem Verlauf der Arbeitsraumbegrenzung können auch derartige Einheiten aus Restgitter und Fertigteilen hauptzeitparallel entladen werden.

Bei der Erstellung des erfindungsgemäßen Bearbeitungsprogramms zur Durchführung des erfindungsgemäßen Bearbeitungsverfahrens werden die Steuerbefehle zur Steuerung der Veränderung des Verlaufs der Arbeitsraumbegrenzung und eine im Rahmen des erfindungsgemäßen Programmierverfahrens definierte Belegung des oder der zu bearbeitenden Werkstücke mit Bearbeitungsprodukten aufeinander abgestimmt. Bereits bei der Erstellung des für die erfindungsgemäße maschinelle Anordnung bestimmten Computerprogrammes wird demnach sichergestellt, dass der sich während des Bearbeitungsprozesses ändernde Verlauf der Arbeitsraumbegrenzung die zuvor definierte Belegung des oder der zu bearbeitenden Werkstücke mit Bearbeitungsprodukten optimal berücksichtigt. Insbesondere können die Arbeitsraumbegrenzung und das oder die zu bearbeitenden Werkstücke relativ zueinander derart positioniert werden, dass sich für die hauptzeitparallele Entnahme von Bearbeitungsprodukten besonders funktionsgerechte Verhältnisse ergeben.

In bevorzugter Ausgestaltung des erfindungsgemäßen Programmierverfahrens werden zur Steuerung der Veränderung des Verlaufs der Arbeitsraumbegrenzung Steuerbefehle erzeugt, aufgrund derer sich der Verlauf der Arbeitsraumbegrenzung während der Bearbeitungsphase schrittweise verändert und nach einer schrittweisen Veränderung des Verlaufs der Arbeitsraumbegrenzung ausschließlich vollständig erstellte Bearbeitungsprodukte außerhalb des Arbeitsraumes liegen (Patentanspruch 15). Aufgrund dieser Maßnahme ist insbesondere sichergestellt, dass zum Entladen nur solche Bearbeitungsprodukte zugänglich sind, die nicht gleichzeitig auch noch im Innern des Arbeitsraumes der erfindungsgemäßen Anordnung liegen. Ein Entladen derartiger Bearbeitungsprodukte könnte beispielsweise zu Kollisionen des Bearbeitungsproduktes mit der im Innern des Arbeitsraumes vorgesehenen Bearbeitungseinrichtung führen und dadurch die Funktionssicherheit des erfindungsgemäßen Bearbeitungsprozesses beeinträchtigen.

Das Ergebnis des erfindungsgemäßen Programmierverfahrens, also das nach diesem Verfahren erstellte numerische Bearbeitungsprogramm zur Durchführung des erfindungsgemäßen Bearbeitungsverfahrens ist auf einem maschinenlesbaren Träger des erfindungsgemäßen Computerprogramm-Produktes gespeichert. Die Programmierung kann wahlweise off-line oder in einem post-Prozessor der erfindungsgemäßen Anordnung erfolgen. Auch das erfindungsgemäße Programmierverfahren selbst kann numerisch gesteuert durchgeführt werden. Ein entsprechendes Computerprogramm-Produkt mit auf einem maschinenlesbaren Träger gespeicherten Programmcode-Mitteln ist erfindungsgemäß ebenfalls vorgesehen. Besondere Ausführungsarten des Verfahrens nach Patentanspruch 1 sowie der maschinellen Anordnung nach Patentanspruch 5 ergeben sich aus den abhängigen Patentansprüchen 2 bis 4 und 6 bis 13.

Gemäß Patentanspruch 2 wird in bevorzugter Ausgestaltung der Erfindung der Verlauf der Arbeitsraumbegrenzung bereichsweise verändert. Einem bestimmten Bewegungsbereich der Bearbeitungseinrichtung ist ein bestimmter Verlauf der Arbeitsraumbegrenzung zugeordnet. Solange sich die Bearbeitungseinrichtung in dem betreffenden Bewegungsbereich befindet, verändert sich der Verlauf der Arbeitsraumbegrenzung nicht. Eine derartige zeitweise Entkopplung des Verlaufes der Arbeitsraumbegrenzung von Bewegungen der Bearbeitungseinrichtung während der Bearbeitungsphase ist in mehrerlei Hinsicht vorteilhaft. Die erfindungsgemäße Lösung besitzt beispielsweise steuerungstechnische Vorzüge. Von Vorteil ist außerdem, dass sich der Umfang der von der Arbeitsraumbegrenzung bzw. von dem beweglichen Begrenzungselement auszuführenden Bewegungen und damit beispielsweise auch die mit derartigen Bewegungen verbundenen Beanspruchungen der Gesamtanordnung minimieren.

In weiterer vorteilhafter Ausgestaltung der Erfindung ist ausweislich Patentanspruch 3 vorgesehen, dass sich die Bearbeitungseinrichtung während der Bearbeitungsphase relativ zu dem oder den zu bearbeitenden Werkstücken in einer Hauptbewegungsrichtung bewegt und dass die Arbeitsraumbegrenzung dieser Bewegung folgt. Die Grenze zwischen dem Arbeitsraum und somit dem Gefahrenbereich der Bearbeitungseinrichtung einerseits und der insbesondere als Entladeraum nutzbaren Arbeitsraumumgebung verlagert sich in einer einzigen Richtung.

Erfindungsgemäß ist es denkbar, die Arbeitsraumbegrenzung zeitlich versetzt auf die Bewegung der Bearbeitungseinrichtung folgen zu lassen. In diesem Fall lässt sich auf besonders sichere Art und Weise eine Kollision zwischen der Bearbeitungseinrichtung und der in ihrem Verlauf veränderten Arbeitsraumbegrenzung verhindern. Alternativ ist in weiterer Ausgestaltung der Erfindung vorgesehen, dass der Verlauf der Arbeitsraumbegrenzung gleichzeitig mit derjenigen Bewegung der Bearbeitungseinrichtung verändert wird, welche zu der Veränderung des Verlaufes der Arbeisraumbegrenzung führt (Patentanspruch 4). Eine derartige Synchronisierung der Veränderung des Verlaufes der Arbeitsraumbegrenzung und der Bewegung der Bearbeitungseinrichtung kann insbesondere aus Zeitgründen zweckmäßig sein. Sie lässt sich mittels eines separaten Antriebes für die Arbeitsraumbegrenzung realisieren.

Für den Fall, dass die hauptzeitparallele Zugänglichkeit von Bearbeitungsprodukten zum Entladen dieser Bearbeitungsprodukte genutzt wird, ist in bevorzugter Ausgestaltung der Erfindung eine maschinelle Entladeeinrichtung vorgesehen (Patentanspruch 6). Ergänzend oder alternativ können Bearbeitungsprodukte, die bereits während der Bearbeitungsphase zugänglich sind, manuell entladen werden.

Im Interesse eines konstruktiv einfachen Aufbaus der Gesamtanordnung empfiehlt es sich, die Bearbeitungseinrichtung und das oder die beweglichen Begrenzungselemente bei ihren Bewegungen an einer gemeinsamen Führung zu führen (Patentanspruch 7).

In bevorzugter Ausgestaltung der Erfindung sind besondere Vorkehrungen dafür getroffen, dass die Bearbeitungseinrichtung nicht in einen von der Arbeitsraumbegrenzung zuvor freigegebenen Bereich gelangen kann. Diese Maßnahmen dienen insbesondere dem Schutz von Personen, die sich in dem von der Arbeitsraumbegrenzung zuvor freigegebenen Bereich aufhalten können.

Gemäß Patentanspruch 8 ist als Sicherheitseinrichtung der vorstehenden Art eine Vorrichtung vorgesehen, mittels derer die Bearbeitungseinrichtung an einer Rückstellbewegung in einen von der Arbeitsraumbegrenzung zuvor freigegebenen Bereich gehindert wird. In vorteilhafter Weiterbildung der Erfindung wird die Vorrichtung zur Bewegungsbegrenzung der Bearbeitungseinrichtung wenigstens zum Teil von der Arbeitsraumbegrenzung gebildet (Patentanspruch 9). Gemäß Patentanspruch 10 umfasst die Vorrichtung zur Bewegungsbegrenzung der Bearbeitungseinrichtung einen Positionsdetektor zur Erfassung der Position der Bearbeitungseinrichtung. Der Positionsdetektor ist mit einer Antriebssteuerung des Bearbeitungsantriebes verbunden. Wird im Rahmen der Positionsdetektion festgestellt, dass sich die Bearbeitungseinrichtung einem von der Arbeitsraumbegrenzung zuvor freigegebenen Bereich nähert, so sorgt die Antriebssteuerung durch entsprechende Ansteuerung des Bearbeitungsantriebes dafür, dass die Bearbeitungseinrichtung nicht in den für sie gesperrten Bereich gelangen kann. Insbesondere kann die Antriebssteuerung den Bearbeitungsantrieb stillsetzen.

Eine weitere Sicherheitseinrichtung der erfindungsgemäßen Anordnung ist Gegenstand von Patentanspruch 11. Der anspruchsgemäße Kollisionsschutz an der Außenseite des Arbeitsraumes soll Kollisionen zwischen der ihren Verlauf verändernden Arbeitsraumbegrenzung und Personen oder Material in der Umgebung des Arbeitsraumes der Bearbeitungseinrichtung verhindern bzw. die Schäden aufgrund derartiger Kollisionen möglichst weitgehend begrenzen. Als Einrichtungen zum Kollisionsschutz denkbar sind insbesondere Lichtgitter an der Außenseite der Arbeitsraumbegrenzung bzw. dort angeordnete Lichtschranken mit mitfahrenden Umlenkspiegeln für Sicherheits-Lichtstrahlen.

Eine besonders praxisrelevante Bauart der erfindungsgemäßen Anordnung ist in Patentanspruch 12 beschrieben. Im Falle dieser Erfindungsbauart ist als Bearbeitungseinrichtung insbesondere eine Einrichtung zum Laserschneiden von Werkstücken vorgesehen.

Für die erfindungsgemäße Arbeitsraumbegrenzung kommen unterschiedliche Bauarten in Frage. Denkbar sind beispielsweise Lichtschranken, welche die Grenzen des Arbeitsraumes der maschinellen Anordnung markieren. Gemäß Patentanspruch 13 bevorzugt wird eine Einrichtung zum Schutz gegen Emissionen, die von dem Arbeitsraum der Bearbeitungseinrichtung ausgehen. Als Emissionen in Frage kommen beispielsweise Staub und Dämpfe, die an der Bearbeitungsstelle der Bearbeitungseinrichtung anfallen und von der Arbeitsraumbegrenzung an einem Verlassen des Arbeitsraumes gehindert werden. Wird als Bearbeitungseinrichtung eine Einrichtung zur Werkstückbearbeitung mittels Laserstrahlung eingesetzt, so kann die Arbeitsraumbegrenzung die Funktion einer Laserschutzwand übernehmen.

Nachfolgend wird die Erfindung anhand beispielhafter schematischer Darstellungen näher erläutert. Es zeigen:
- Figuren 1a, 1b, 1c, 1d: eine erste Bauart einer maschinellen Anordnung zum Laserschneiden von Blechen zu unterschiedlichen Zeitpunkten der Blechbearbeitung und
- Figur 2: eine zweite Bauart einer maschinellen Anordnung zum Laserschneiden von Blechen.

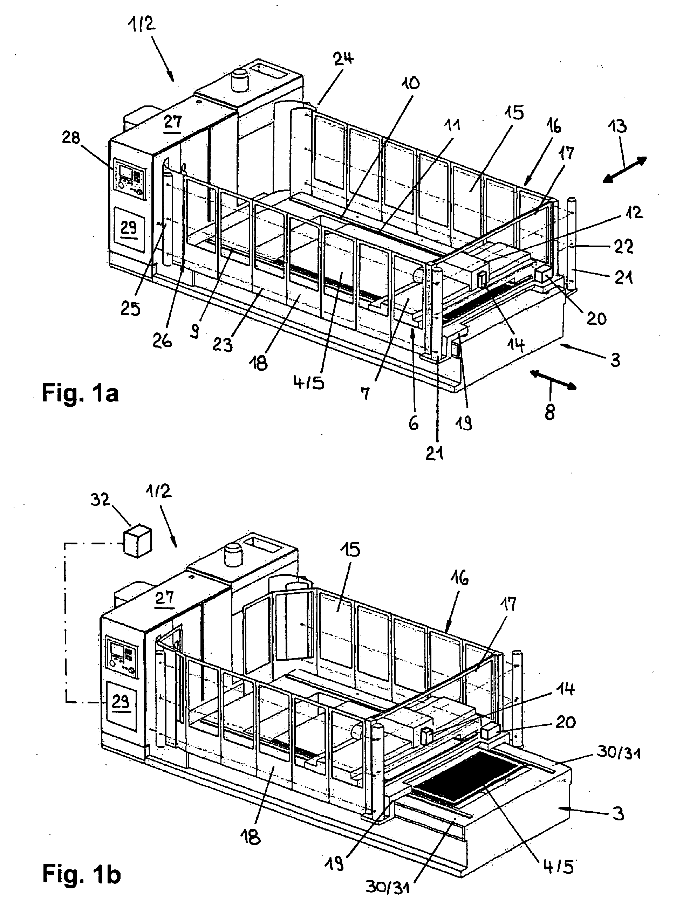

Gemäß den Figuren 1a bis 1d besteht eine maschinelle Anordnung 1 aus einer kompakten Bearbeitungsmaschine 2. Die Bearbeitungsmaschine 2 besitzt ein Maschinenbett 3, innerhalb dessen eine Werkstückauflage 4 herkömmlicher Bauart angeordnet ist. Die Werkstückauflage 4 lagert als Werkstück ein Blech 5.

Über die Werkstückauflage 4 und das darauf aufliegende Blech 5 ist eine Bewegungseinheit 6 bewegbar. Diese umfasst eine portalartige Brücke 7, die motorisch angetrieben in Richtung eines Doppelpfeils 8 entlang des Maschinenbetts 3 verfahren kann. Bei ihrer Bewegung in Richtung des Doppelpfeils 8 ist die Brücke 7 mittels einer von Führungsschienen 9, 10 gebildeten Führung an dem Maschinenbett 3 geführt. Zum Antrieb der Brücke 7 dient ein herkömmlicher Zahnstangenantrieb von dem in Figur 1a eine Zahnstange 11 zu erkennen ist.

Zusätzlich zu der Brücke 7 umfasst die Bewegungseinheit 6 einen Querschlitten 12, der mit Hilfe eines üblichen motorischen Antriebes in Richtung eines Doppelpfeils 13 entlang der Brücke 7 bewegt werden kann. Der Querschlitten 12 trägt einen als Bearbeitungseinrichtung dienenden und in den Abbildungen nur angedeuteten Laserschneidkopf 14. Aufgrund der Beweglichkeit der Brücke 7 sowie aufgrund der Beweglichkeit des an der Brücke 7 geführten Querschlittens 12 kann der Laserschneidkopf 14 jeden beliebigen Punkt an dem Blech 5 anfahren. Der motorische Antrieb der Brücke 7 bildet gemeinsam mit dem motorischen Antrieb des Querschlittens 12 einen Bearbeitungsantrieb, mittels dessen der Laserschneidkopf 14 während einer Bearbeitungsphase unter Ausschneiden von Fertigteilen aus dem Blech 5 relativ zu dem Blech 5 bewegt wird.

Während der Werkstückbearbeitung befindet sich der Laserschneidkopf 14 im Innern eines Arbeitsraumes 15. Dieser wird von einer Arbeitsraumbegrenzung 16 eingefasst, die als bewegliche Begrenzungselemente eine Rückwand 17 sowie beidseits der Werkstückauflage 4 seitliche Wandelemente 18 aufweist. Die seitlichen Wandelemente 18 sind relativ zueinander um vertikale Schwenkachsen schwenkbar und bilden dadurch an einander gegenüberliegenden Seiten der Werkstückauflage 4 jeweils eine falttorartige Anordnung. Als Alternativen zu den falttorartigen seitlichen Wandelementen 18 sind beispielsweise seitliche Faltenbälge, seitliche Rollwände, seitliche Sektionaltore oder seitliche Teleskopwände denkbar. An Stelle der beispielhaft gezeigten Arbeitsraumbegrenzung 16 insgesamt könnte unter anderem auch eine U-förmige Einfassung des Arbeitsraumes 15 vorgesehen werden, die als starre Einheit relativ zu dem Maschinenbett 3 bewegbar ist.

Die Rückwand 17 ist an einem Träger 19 der Arbeitsraumbegrenzung 16 montiert, der mit einem in den Figuren 1a bis 1d schematisch dargestellten motorischen Begrenzungsantrieb 20 herkömmlicher Bauart versehen ist. In Frage kommen beispielsweise ein Zahnstangenantrieb oder ein Bandantrieb.

Mittels des Begrenzungsantriebes 20 kann der Träger 19 in Richtung des Doppelpfeils 8 längs des Maschinenbettes 3 verfahren werden. Dabei ist der Träger 19 an den Führungsschienen 9, 10 geführt. Die Führungsschienen 9, 10 bilden folglich eine gemeinsame Führung für die Belegungen des Laserschneidkopfes 14 sowie für die Bewegungen der Arbeitsraumbegrenzung 16.

Bei seiner Bewegung in Richtung des Doppelpfeils 8 nimmt der Träger 19 außer der Rückwand 17 auch die an den Träger 19 angebundenen seitlichen Wandelemente 18 mit. Auch die seitlichen Wandelemente 18 sind an dem Maschinenbett 3 in ihrer Bewegungsrichtung geführt. Spalte, die sich zwischen der Rückwand 17 und den seitlichen Wandelementen 18 einerseits und dem Maschinenbett 3 andererseits ergeben können, sind abgedichtet. Zu diesem Zweck können beispielsweise Lappen- oder Borstendichtungen vorgesehen sein.

Nahe der Rückwand 17 sind an dem Träger 19 Spiegelsäulen 21 angebracht. Diese lagern andeutungsweise dargestellte Umlenkspiegel 22, mittels derer Sicherheits-Lichtstrahlen 23 umgelenkt werden. Die Sicherheits-Lichtstrahlen 23 werden von einer stationären Strahlquelle 24 abgestrahlt und gelangen über die Umlenkspiegel 22 der Spiegelsäulen 21 zu einem gleichfalls stationären Empfänger 25. Gemeinsam mit den Spiegelsäulen 21, den Umlenkspiegeln 22 und den Sicherheits-Lichtstrahlen 23 bilden die Strahlquelle 24 und der Empfänger 25 eine als Lichtschranke 26 ausgeführte Einrichtung zum Kollisionsschutz.

Ein Versorgungs- und Steuerungsmodul 27 ist der Strahlquelle 24 und dem Empfänger 25 benachbart an das Maschinenbett 3 angebaut. Zwischen dem Versorgungs- und Steuerungsmodul 27 und der Werkstückauflage 4 verbleibt ein Abstand, der in etwa der entsprechenden Abmessung der Bewegungseinheit 6 entspricht.

Das Versorgungs- und Steuerungsmodul 27 umfasst unter anderem eine Bedieneinheit 28 sowie eine der Einfachheit halber nur angedeutete numerische Maschinensteuerung 29. Die numerische Maschinensteuerung 29 steuert alle wesentlichen Funktionen der maschinellen Anordnung 1. Insbesondere ist die numerische Maschinensteuerung 29 als Antriebssteuerung des Begrenzungsantriebes 20 sowie als Antriebssteuerung des Bearbeitungsantriebes des Laserschneidkopfs 14 vorgesehen. An der numerischen Maschinensteuerung 29 wird ein maschinenlesbarer Datenträger eingesetzt, auf welchem das zuvor off-line erstellte Bearbeitungsprogramm für den betreffenden Anwendungsfall gespeichert ist.

In den Figuren 1b bis 1d sind andeutungsweise Indexierbolzen 30 zu erkennen, die in das Maschinenbett 3 integriert sind. Den Indexierbolzen 30 zugeordnet sind Indexieröffnungen, die an der Unterseite des Trägers 19 vorgesehen sind und die in den Figuren 1a bis 1d verdeckt liegen. Die Indexierbolzen 30 an dem Maschinenbett 3 und die zugehörigen Indexieröffnungen an der Unterseite des Trägers 19 sind Teile einer Vorrichtung 31 zur Bewegungsbegrenzung des Laserschneidkopfs 14. Die Funktionsweise der Vorrichtung 31 wird nachstehend im Einzelnen erläutert. Alternativ oder ergänzend zu den Indexierbolzen 30 und den diesen zugeordneten Indexieröffnungen kann die Vorrichtung 31 zur Bewegungsbegrenzung des Laserschneidkopfes 14 einen Positionsdetektor in Form einer in Figur 1b angedeuteten 3D-Kamera 32 aufweisen. Die 3D-Kamera 32 ist mit der numerischen Maschinensteuerung 29 verbunden. Sie dient zur Erfassung der momentanen Position des Laserschneidkopfes 14. In Abhängigkeit von der erfassten Position des Laserschneidkopfes 14 kann dessen Bearbeitungsantrieb durch die numerische Maschinensteuerung 29 angesteuert werden.

Figur 1a zeigt die maschinelle Anordnung 1 bzw. die Bearbeitungsmaschine 2 zu Beginn der Bearbeitungsphase. Die Werkstückauflage 4 wurde unmittelbar zuvor mit einem zu bearbeitenden Blech 5 beladen.

Nach dem Einschalten des Laserschneidkopfs 14 wird dieser mittels des von der numerischen Maschinensteuerung 29 gesteuerten Bearbeitungsantriebes durch entsprechende Bewegung der Bewegungseinheit 6 relativ zu dem ortsfesten Blech 5 bewegt und schneidet dabei aus dem Blech 5 die gewünschten Fertigteile aus. Die Arbeitsraumbegrenzung 16 bleibt dabei zunächst stationär. Sie schützt die Arbeitsraumumgebung vor Emissionen, die aufgrund der Werkstückbearbeitung im Innern des Arbeitsraumes 15 generiert werden. Insbesondere dient die Arbeitsraumbegrenzung 16 als Laserschutzwand.

Zum Ausschneiden der Fertigteile aus dem Blech 5 wird der Laserschneidkopf 14 während der Bearbeitungsphase zweiachsig über das Blech 5 bewegt. Die Hauptbewegungsrichtung des Laserschneidkopfs 14 verläuft zu dem Versorgungs- und Steuerungsmodul 27 hin. Verlässt der Laserschneidkopf 14 im Rahmen seiner Arbeitsbewegung einen in der numerischen Maschinensteuerung 29 hinterlegten Bewegungsbereich im Innern des Arbeitsraumes 15, so wird die Arbeitsraumbegrenzung ausgehend von der Position gemäß Figur 1a in Richtung auf das Versorgungs- und Steuerungsmodul 27, d.h. in der Hauptbewegungsrichtung des Laserschneidkopfs 14, nachgesetzt. Es ergeben sich dann die Verhältnisse gemäß Figur 1b. Dadurch kommt der in Figur 1b geschwärzte Teilbereich des Bleches 5 einschließlich der in diesem Teilbereich freigeschnittenen Fertigteile au-βerhalb des Arbeitsraumes 15 zu liegen. Die damit zugänglichen Fertigteile können in dem gezeigten Beispielsfall manuell entladen werden. Gleichzeitig setzt der Laserschneidkopf 14 im Innern des Arbeitsraums 15 die Werkstückbearbeitung fort. Es besteht also die Möglichkeit eines hauptzeitparallelen Zugriffs auf zuvor erstellte Fertigteile.

Die Position, in welche der Träger 19 mittels des Begrenzungsantriebes 20 beim Nachsetzen der Arbeitsraumbegrenzung 16 an dem Maschinenbett 3 verfährt, ist ebenfalls in der numerischen Maschinensteuerung 29 hinterlegt. Diese Position des Trägers 19 ist derart gewählt, dass die Arbeitsraumbegrenzung 16, insbesondere deren Rückwand 17, einen hinreichenden Abstand von dem Laserschneidkopf 14 einhält und folglich eine Kollision zwischen dem Laserschneidkopf 14 und der Arbeitsraumbegrenzung 16 bei der von dem Laserschneidkopf 14 durchgeführten Werkstückbearbeitung ausgeschlossen ist. Gleichzeitig ist in dem dargestellten Beispielsfall durch eine entsprechende Programmierung der numerischen Maschinensteuerung 29 dafür gesorgt, dass nach dem Verfahren der Arbeitsraumbegrenzung 16 lediglich vollständig frei geschnittene Fertigteile au-βerhalb des Arbeitsraumes 15 zu liegen kommen. Zu diesem Zweck wurden bei der Erstellung des mittels der numerischen Maschinensteuerung 29 abgearbeiteten Bearbeitungsprogrammes Steuerbefehle erzeugt, die sowohl die im Voraus definierte Belegung des Bleches 5 mit Fertigteilen als auch die von der Arbeitsraumbegrenzung 16 im Laufe des Bearbeitungsprozesses eingenommenen Positionen berücksichtigen.

In der nach dem Nachsetzen eingenommenen Position wird der Träger 19 mittels Indexierbolzen 30 festgelegt. Die neue Position des Trägers 19 an dem Maschinenbett 3 ist derart gewählt, dass zwei einander an dem Maschinenbett 3 gegenüberliegende Indexierbolzen 30 in die Indexieröffnungen an der Unterseite des Trägers 19 eingreifen können.

Über den Träger 19 ist auch die Rückwand 17 der Arbeitsraumbegrenzung 16 über die Indexierbolzen 30 gegen eine Bewegung in Richtung des Doppelpfeils 8 blockiert. Würde die Bewegungseinheit 6 beispielsweise aufgrund einer Fehlsteuerung in Richtung auf das freie Ende des Maschinenbettes 3 und damit in Richtung auf denjenigen Bereich der Werkstückauflage 4 bewegt, in welchem zuvor erstellte Fertigteile hauptzeitparallel entladen werden, so würde die Bewegungseinheit 6 auf den Träger 19 bzw. auf die Rückwand 17 der Arbeitsraumbegrenzung 16 auflaufen. Der Träger 19 und die Rückwand 17 der Arbeitsraumbegrenzung 16 würden in diesem Fall einen mechanischen Festanschlag für die Bewegungseinheit 6 bilden und dadurch verhindern, dass die Bewegungseinheit 6 und der daran angebrachte Laserschneidkopf 14 in den von der Arbeitsraumbegrenzung 16 zuvor freigegebenen Bereich gelangen. Dementsprechend bildet die Arbeitsraumbegrenzung 16 einen Teil der Vorrichtung 31 zur Bewegungsbegrenzung des Laserschneidkopfs 14.

Ergänzend oder alternativ kann die 3D-Kamera 32 die Position der Bewegungseinheit 6 erfassen und in Abhängigkeit von der erfassten Position den Bearbeitungsantrieb der Bewegungseinheit 6 über die numerische Maschinensteuerung 29 ansteuern. Sobald mittels der 3D-Kamera 32 festgestellt wird, dass sich die Bewegungseinheit 6 in einen für sie gesperrten Bereich, insbesondere in einen von der Arbeitsraumbegrenzung 16 zuvor freigegebenen und bereits für Entladevorgänge genutzten Bereich, bewegt, werden vorzugsweise der Bearbeitungsantrieb der Bewegungseinheit 6 und/oder der Laserschneidkopf 14 mittels der numerischen Maschinensteuerung 29 abgeschaltet.

Denkbar ist auch, dass die 3D-Kamera 32 den für Entladevorgänge genutzten Bereich der Werkstückauflage 4 detektiert und den Bearbeitungsantrieb des Laserschneidkopfs 14 bzw. den Laserschneidkopf 14 ansteuert, sobald die Bewegungseinheit 6 in den detektierten Bereich einfährt.

Die Lichtschranke 26 mit den mitfahrenden Umlenkspiegeln 22 definiert eine Sicherheitszone um den Arbeitsraum 15 bzw. die Arbeitsraumbegrenzung 16. Bei sich bewegender Arbeitsraumbegrenzung 16 sorgt die Lichtschranke 26 dafür, dass Kollisionen der Arbeitsraumbegrenzung 16 mit Personen oder Gegenständen vermieden bzw. dass die Schäden aufgrund von Kollisionen möglichst gering gehalten werden. Wird wenigstens einer der Sicherheits-Lichtstrahlen 23 unterbrochen, so setzt die numerische Maschinensteuerung 29 den Begrenzungsantrieb 20 still. Zusätzlich können auch der Laserschneidkopf 14 und/oder dessen Bearbeitungsantrieb abgeschaltet werden. Eine Abschaltung des Laserschneidkopfs 14 bzw. des Bearbeitungsantriebes ist auch die Folge einer Unterbrechung wenigstens einer der Sicherheits-Lichtstrahlen 23 bei stationärer Arbeitsraumbegrenzung 16. Ergänzend oder alternativ kann als Kollisionsschutz an der Außenseite der Arbeitsraumbegrenzung 16 ein mit einem Steuermedium gefüllter flexibler Schlauch angebracht sein. Wird der Schlauch aufgrund einer Kollision der Arbeitsraumbegrenzung 16 komprimiert, so bewirkt das dadurch im Innern des Schlauches verdrängte Steuermedium beispielsweise eine Abschaltung des Begrenzungsantriebes 20.

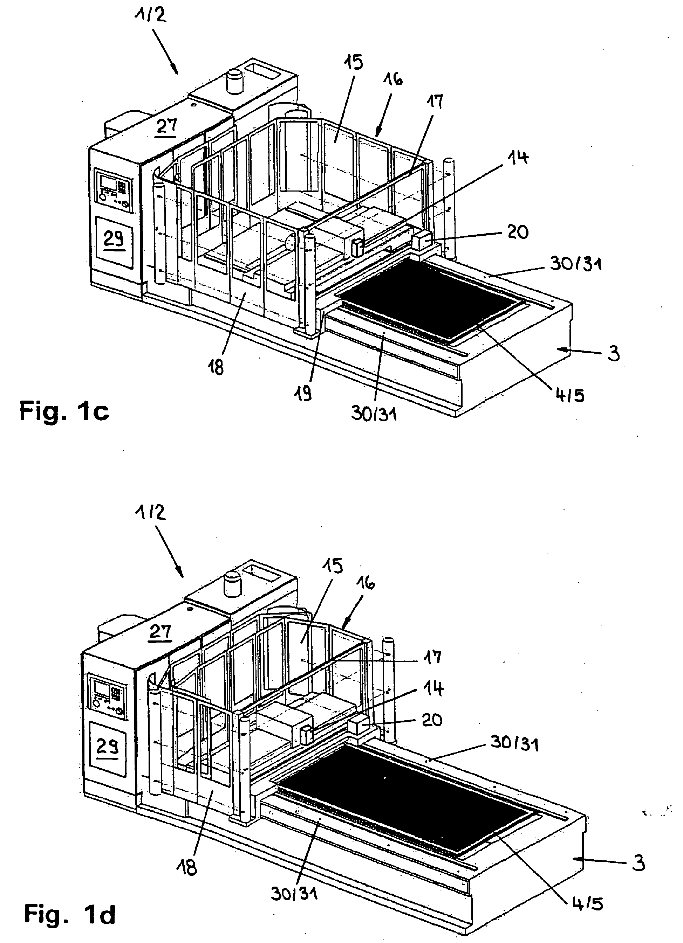

Im Anschluss an den in Figur 1b veranschaulichten Betriebszustand der maschinellen Anordnung 1 ergeben sich nacheinander die Verhältnisse gemäß Figur 1c und gemäß Figur 1d. Der Laserschneidkopf 14 wird durch entsprechendes Verfahren der Bewegungseinheit 6 bereichsweise in seiner Hauptbewegungsrichtung zu dem Versorgungs- und Steuerungsmodul 27 hin bewegt. Mit geringfügigem zeitlichen Versatz folgt dem Laserschneidkopf 14 die Arbeitsraumbegrenzung 16. Die zu dem Versorgungs- und Steuerungsmodul 27 hin gelegenen seitlichen Wandelemente 18 der Arbeitsraumbegrenzung 16 werden dabei nach innen umgelenkt, bis sich schließlich der in Figur 1d gezeigte Betriebszustand einstellt. Der Träger 19 ist sowohl in Figur 1c als auch in Figur 1d mittels Indexierbolzen 30 an dem Maschinenbett 3 in Richtung des Doppelpfeils 8 blockiert.

Mit jedem Nachsetzen der Arbeitsraumbegrenzung 16 wird ein zusätzlicher Bereich der Werkstückauflage 4 mit den darauf aufliegenden, von dem Laserschneidkopf 14 zuvor freigeschnittenen Fertigteilen zugänglich. Während der Laserschneidkopf 14 in seinem nächsten Bewegungsbereich weitere Fertigteile freischneidet, werden die infolge der Bewegung der Arbeitsraumbegrenzung 16 außerhalb des Arbeitsraums 15 angeordneten Fertigteile manuell entladen. Auch in den Figuren 1c und 1d ist der für Entladevorgänge zugängliche Bereich der Werkstückauflage 4 bzw. des. Bleches 5 schwarz eingefärbt.

Beendet ist die Bearbeitungsphase, wenn sich die Bewegungseinheit 6 mit dem Laserschneidkopf 14 sowie die Rückwand 17 der Arbeitsraumbegrenzung 16 in den Positionen gemäß Figur 1d befinden. Bei diesem Betriebszustand liegt der gesamte von dem Blech 5 belegte Teil der Werkstückauflage 4 außerhalb der Arbeitsraumbegrenzung 16. Damit können auch die letzten Fertigteile von der Werkstückauflage 4 entnommen werden. Nach dem vollständigen Entladen der Fertigteile wird das verbleibende Restgitter entweder manuell oder mittels einer hierfür vorgesehenen maschinellen Einrichtung von der Werkstückauflage 4 abgehoben und aus dem Nahbereich der maschinellen Anordnung 1 entfernt.

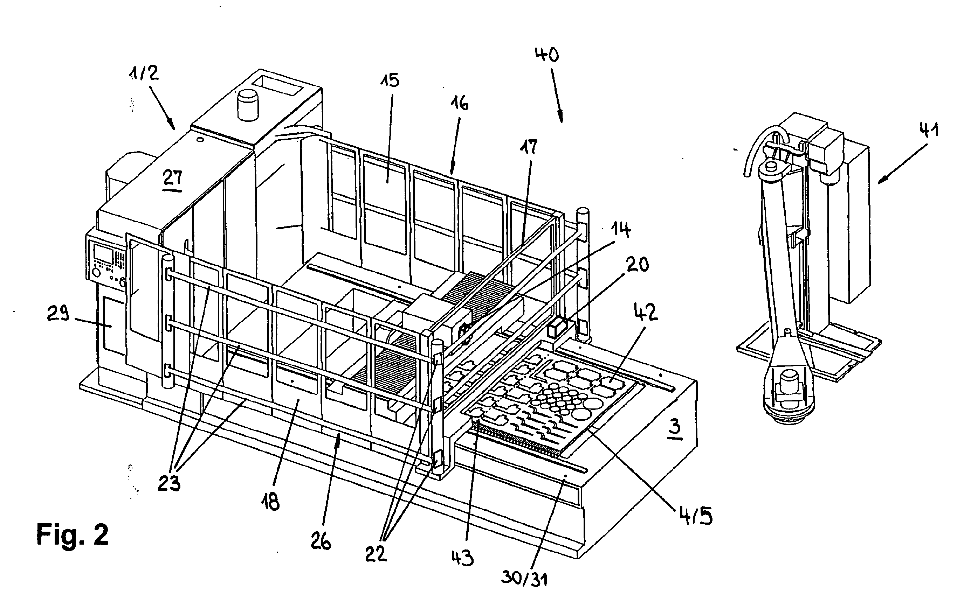

Eine maschinelle Anordnung 40, wie sie in Figur 2 gezeigt ist, umfasst zusätzlich zu der maschinellen Anordnung 1 gemäß den Figuren 1a bis 1d eine maschinelle Entladeeinrichtung 41, die beispielsweise als Entladeroboter ausgeführt sein kann. Die maschinelle Entladeeinrichtung 41 ist neben dem Maschinenbett 3 aufgestellt. Im Übrigen stimmt die maschinelle Anordnung 40 gemäß Figur 2 in Aufbau und Funktionsweise mit der in den Figuren 1a bis 1d gezeigten maschinellen Anordnung 1 grundsätzlich überein.

Während im Falle der maschinellen Anordnung 1 gemäß den Figuren 1a bis 1d die von dem Laserschneidkopf 14 freigeschnittenen Fertigteile manuell entladen wurden, gestattet die maschinelle Entladeeinrichtung 41 automatisierte Entladevorgänge. Ebenso wie die übrigen Funktionskomponenten der maschinellen Anordnung 40 wird auch die maschinelle Entladeeinrichtung 41 mittels der numerischen Maschinensteuerung 29 gesteuert. Zu entladende Bearbeitungsprodukte in Form von Fertigteilen 42 mit unterschiedlicher Geometrie sind in Figur 2 beispielhaft gezeigt. Anstelle der Fertigteile 42 können als Bearbeitungsprodukte auch Bearbeitungsabfälle zu entladen sein. Aus Figur 2 ersichtlich ist die enge Belegung des Bleches 5 mit den auszuschneidenden Fertigteilen 42.

Außerhalb des Arbeitsraumes 15 ist in Figur 2 an dem bearbeiteten Teil des Bleches 5 eine Schnittlinie 43 punktiert angedeutet. Aufgrund entsprechender Programmierung der numerischen Maschinensteuerung 29 hat der Laserschneidkopf 14 vor dem Nachsetzen der Arbeitsraumbegrenzung 16 an dem Blech 5 einen entlang der Schnittlinie 43 verlaufenden Trennschnitt erstellt. Infolgedessen kann nach dem Verfahren der Arbeitsraumbegrenzung 16 zusätzlich zu den Fertigteilen 42 auch bereits ein Teil des Restgitters der Blechbearbeitung hauptzeitparallel entladen werden. Diese Funktion ist auch an der Bearbeitungsmaschine 2 gemäß den Figuren 1a bis 1d realisierbar.

## Patentansprüche

1. Verfahren zum Bearbeiten von Werkstücken (5), insbesondere von Blechen, mittels einer maschinellen Anordnung (1, 40), im Rahmen dessen
• eine Bearbeitungseinrichtung (14) der maschinellen Anordnung (1, 40) während einer Bearbeitungsphase unter sukzessivem Erstellen einer Mehrzahl von Bearbeitungsprodukten (42) relativ zu dem oder den zu bearbeitenden Werkstücken (5) bewegt wird und
• der Verlauf einer Arbeitsraumbegrenzung (16) eines Arbeitsraumes (15) der maschinellen Anordnung (1, 40), in welchem die Bearbeitungseinrichtung (14) während der Bearbeitungsphase angeordnet ist, während der Bearbeitungsphase abgestimmt auf die Bewegung der Bearbeitungseinrichtung (14) verändert wird, indem eine als bewegliches Begrenzungselement der Arbeitsraumbegrenzung (16) vorgesehene Rückwand (17) der Arbeitsraumbegrenzung (16) während der Bearbeitungsphase abgestimmt auf die Bewegung der Bearbeitungseinrichtung (14) derart bewegt wird, dass während der Bearbeitungsphase wenigstens ein Bearbeitungsprodukt (42) au-βerhalb des Arbeitsraumes (15) zu liegen kommt,
**dadurch gekennzeichnet, dass**
die Rückwand (17) der Arbeitsraumbegrenzung (16) während der Bearbeitungsphase abgestimmt auf die Bewegung der Bearbeitungseinrichtung (14) bewegt wird, indem ein Träger (19) der Arbeitsraumbegrenzung (16), an welchem die Rückwand (17) der Arbeitsraumbegrenzung (16) montiert ist, gemeinsam mit der Rückwand (17) der Arbeitsraumbegrenzung (16) entkoppelt von der Bearbeitungseinrichtung (14) bewegt wird und dass durch die von der Bearbeitungseinrichtung (14) entkoppelte Bewegung des Trägers (19) und der Rückwand (17) der Arbeitsraumbegrenzung (16) der Verlauf der Arbeitsraumbegrenzung (16) abgestimmt auf die Bewegung der Bearbeitungseinrichtung (14) verändert wird und wenigstens ein Bearbeitungsprodukt (42) au-βerhalb des Arbeitsraumes (15) zu liegen kommt.

2. Verfahren nach Anspruch 1, **dadurch gekennzeichnet, dass** der von der Bearbeitungseinrichtung (14) während der Bearbeitungsphase durchlaufene Bewegungsbereich in mehrere Bewegungs-Teilbereiche unterteilt wird, innerhalb derer die Bearbeitungseinrichtung (14) während der Bearbeitungsphase unter Erstellen wenigstens eines Bearbeitungsproduktes (42) relativ zu dem oder den zu bearbeitenden Werkstücken (5) bewegt wird und dass durch die von der Bearbeitungseinrichtung (14) entkoppelte Bewegung des Trägers (19) und der Rückwand (17) der Arbeitsraumbegrenzung (16) unterschiedliche Bewegungs-Teilbereiche der Bearbeitungseinrichtung (14) und jeweils ein spezifischer Verlauf der Arbeitsraumbegrenzung (16), bei welchem wenigstens ein Bearbeitungsprodukt (42) außerhalb des Arbeitsraumes (15) zu liegen kommt, einander zugeordnet werden.

3. Verfahren nach einem der vorhergehenden Ansprüche, **dadurch gekennzeichnet, dass** die Bearbeitungseinrichtung (14) während der Bearbeitungsphase in einer Hauptbewegungsrichtung relativ zu dem oder den zu bearbeitenden Werkstücken. (5) bewegt wird und dass durch die von der Bearbeitungseinrichtung (14) entkoppelte Bewegung des Trägers (19) und der Rückwand (17) der Arbeitsraumbegrenzung (16) der Verlauf der Arbeitsraumbegrenzung (16) während der Bearbeitungsphase abgestimmt auf diejenige Bewegung der Bearbeitungseinrichtung (14) verändert wird, welche die Bearbeitungseinrichtung (14) in ihrer Hauptbewegungsrichtung ausführt.

4. Verfahren nach einem der vorhergehenden Ansprüche, **dadurch gekennzeichnet, dass** durch die von der Bearbeitungseinrichtung (14) entkoppelte Bewegung des Trägers (19) und der Rückwand (17) der Arbeitsraumbegrenzung (16) der Verlauf der Arbeitsraumbegrenzung (16) gleichzeitig mit derjenigen Bewegung der Bearbeitungseinrichtung (14) verändert wird, welche zu der Veränderung des Verlaufes der Arbeitsraumbegrenzung (16) führt.

5. Maschinelle Anordnung zum Bearbeiten von Werkstücken (5), insbesondere von Blechen,
• mit einer Bearbeitungseinrichtung (14),
• mit einem Bearbeitungsantrieb, mittels dessen die Bearbeitungseinrichtung (14) während einer Bearbeitungsphase unter sukzessivem Erstellen einer Mehrzahl von Bearbeitungsprodukten (42) relativ zu dem oder den zu bearbeitenden Werkstücken (5) bewegbar ist,
• mit einem Arbeitsraum (15), in welchem die Bearbeitungseinrichtung (14) während der Bearbeitungsphase angeordnet ist sowie
• mit einer für den Arbeitsraum (15) vorgesehenen Arbeitsraumbegrenzung (16), deren Verlauf während der Bearbeitungsphase abgestimmt auf die Bewegung der Bearbeitungseinrichtung (14) veränderbar ist, indem eine als bewegliches Begrenzungselement der Arbeitsraumbegrenzung (16) vorgesehene Rückwand (17) der Arbeitsraumbegrenzung (16) während der Bearbeitungsphase mittels eines gesteuerten Begrenzungsantriebes (20) abgestimmt auf die Bewegung der Bearbeitungseinrichtung (14) derart bewegbar ist, dass während der Bearbeitungsphase wenigstens ein Bearbeitungsprodukt (42) außerhalb des Arbeitsraumes (15) zu liegen kommt.
**dadurch gekennzeichnet, dass**
die Rückwand (17) der Arbeitsraumbegrenzung (16) an einem Träger (19) der Arbeitsraumbegrenzung (16) montiert ist, der während der Bearbeitungsphase mittels des Begrenzungsantriebes (20) gemeinsam mit der Rückwand (17) der Arbeitsraumbegrenzung (16) entkoppelt von der Bearbeitungseinrichtung (14) bewegbar ist und dass durch die von der Bearbeitungseinrichtung (14) entkoppelte Bewegung des Trägers (19) und der Rückwand (17) der Arbeitsraumbegrenzung (16) der Verlauf der Arbeitsraumbegrenzung (16) abgestimmt auf die Bewegung der Bearbeitungseinrichtung (14) veränderbar ist und wenigstens ein Bearbeitungsprodukt (42) außerhalb des Arbeitsraumes (15) zu liegen kommt.

6. Maschinelle Anordnung nach Anspruch 5, **dadurch gekennzeichnet, dass** eine maschinelle Entladeeinrichtung (41) vorgesehen ist, mittels derer Bearbeitungsprodukte (42), die aufgrund der von der Bearbeitungseinrichtung (14) entkoppelten Bewegung des Trägers (19) und der Rückwand (17) der Arbeitsraumbegrenzung (16) außerhalb des Arbeitsraumes (15) zu liegen kommen, aufnehmbar sind.

7. Maschinelle Anordnung nach Anspruch 5 oder 6, **dadurch gekennzeichnet, dass** die Bearbeitungseinrichtung (14) und wenigstens ein bewegliches Begrenzungselement (17, 18) bei Bewegungen an einer gemeinsamen Führung (9, 10) geführt sind.

8. Maschinelle Anordnung nach einem der Ansprüche 5 bis 7, **dadurch gekennzeichnet, dass** eine Vorrichtung (31) zur Bewegungsbegrenzung der Bearbeitungseinrichtung (14) vorgesehen ist, wobei mittels der genannten Vorrichtung (31) eine Rückstellbewegung der Bearbeitungseinrichtung (14) in einen von der Arbeitsraumbegrenzung (16) zuvor freigegebenen Bereich verhinderbar ist.

9. Maschinelle Anordnung nach einem der Ansprüche 5 bis 8, **dadurch gekennzeichnet, dass** die Arbeitsraumbegrenzung (16) wenigstens einen Teil der Vorrichtung (31) zur Bewegungsbegrenzung der Bearbeitungseinrichtung (14) bildet.

10. Maschinelle Anordnung nach einem der Ansprüche 5 bis 9, **dadurch gekennzeichnet, dass** die Vorrichtung (31) zur Bewegungsbegrenzung der Bearbeitungseinrichtung (14) einen Positionsdetektor (32) zur Erfassung der Position der Bearbeitungseinrichtung (14) umfasst, der mit einer Antriebssteuerung (29) des Bearbeitungsantriebes in Verbindung steht und dass der Bearbeitungsantrieb durch die Antriebssteuerung (29) in Abhängigkeit von der mittels des Positionsdetektors (32) erfassten Position der Bearbeitungseinrichtung (14) derart steuerbar ist, dass eine Rückstellbewegung der Bearbeitungseinrichtung (14) in einen von der Arbeitsraumbegrenzung (16) zuvor freigegebenen Bereich verhinderbar ist.

11. Maschinelle Anordnung nach einem der Ansprüche 5 bis 10, **dadurch gekennzeichnet, dass** wenigstens ein bewegliches Begrenzungselement (17, 18) der Arbeitsraumbegrenzung (16) eine an der Außenseite des Arbeitsraumes (15) angeordnete Einrichtung (26) zum Kollisionsschutz aufweist.

12. Maschinelle Anordnung nach einem der Ansprüche 5 bis 11, **dadurch gekennzeichnet, dass** als Bearbeitungseinrichtung (14) eine Einrichtung zur thermischen Werkstückbearbeitung, vorzugsweise eine Einrichtung zur Werkstückbearbeitung mittels Laserstrahlung, insbesondere eine Einrichtung zum Laserschneiden von Werkstücken (5) vorgesehen ist.

13. Maschinelle Anordnung nach einem der Ansprüche 5 bis 12, **dadurch gekennzeichnet, dass** die Arbeitsraumbegrenzung (16) eine Einrichtung zum Schutz gegen Emissionen bildet, die von dem Arbeitsraum (15) der Bearbeitungseinrichtung (14) ausgehen.

14. Verfahren zum Erstellen eines numerischen Bearbeitungsprogrammes ("Programmierverfahren"), das vorgesehen ist zur Durchführung aller Verfahrensschritte des Verfahrens gemäß einem der Ansprüche 1 bis 4, wobei im Rahmen des Programmierverfahrens
• eine Belegung des oder der zu bearbeitenden Werkstücke (5) mit Bearbeitungsprodukten (42) definiert wird,
• Steuerbefehle zur Steuerung der von der Bearbeitungseinrichtung (14) und dem oder den Werkstücken (5) während der Bearbeitungsphase ausgeführten Relativbewegung erzeugt werden und
• Steuerbefehle zur Steuerung der Veränderung des Verlaufs der Arbeitsraumbegrenzung (16) während der Bearbeitungsphase erzeugt werden,
**dadurch gekennzeichnet**
**dass** als Steuerbefehle zur Steuerung der Veränderung des Verlaufs der Arbeitsraumbegrenzung (16) Steuerbefehle zur Steuerung der von der Bearbeitungseinrichtung (14) entkoppelten Bewegung des Trägers (19) und der Rückwand (17) der Arbeitsraumbegrenzung (16) erzeugt werden und
**dass** die Erzeugung dieser Steuerbefehle und die Definition der Belegung des oder der zu bearbeitenden Werkstücke (5) mit Bearbeitungsprodukten (42) aufeinander abgestimmt werden.

15. Verfahren nach Anspruch 14, **dadurch gekennzeichnet, dass** zur Steuerung der Veränderung des Verlaufs der Arbeitsraumbegrenzung (16) abgestimmt auf die Definition der Belegung des oder der zu bearbeitenden Werkstücke (5) mit Bearbeitungsprodukten (42) Steuerbefehle erzeugt werden, aufgrund derer durch die von der Bearbeitungseinrichtung (14) entkoppelte Bewegung des Trägers (19) und der Rückwand (17) der Arbeitsraumbegrenzung (16) der Verlauf der Arbeitsraumbegrenzung (16) während der Bearbeitungsphase schrittweise verändert wird und nach einer schrittweisen Veränderung des Verlaufs der Arbeitsraumbegrenzung (16) ausschließlich vollständig erstellte Bearbeitungsprodukte (42) außerhalb des Arbeitsraumes (15) liegen.

16. Computerprogramm-Produkt mit auf einem maschinenlesbaren Träger gespeicherten Programmcode-Mitteln, um alle Verfahrensschritte des Verfahrens gemäß einem der Ansprüche 1 bis 4 durchzuführen, wenn das Programm auf einem Computer ausgeführt wird.

17. Computerprogramm-Produkt mit auf einem maschinenlesbaren Träger gespeicherten Programmcode-Mitteln, um alle Verfahrensschritte des Verfahrens gemäß Anspruch 14 oder Anspruch 15 durchzuführen, wenn das Programm auf einem Computer ausgeführt wird.

## Claims

1. Method for processing workpieces (5), in particular metal sheets, using a mechanical arrangement (1, 40), wherein
• a processing device (14) of the mechanical arrangement (1, 40) is moved relative to the workpiece(s) (5) to be processed during a processing phase with the successive production of a plurality of processing products (42) and
• the extension of a workspace delimitation (16) of a workspace (15) of the mechanical arrangement (1, 40) in which the processing device (14) is arranged during the processing phase is changed in accordance with the movement of the processing device (14) during the processing phase by a rear wall (17) of the workspace delimitation (16) provided as a movable delimitation element of the workspace delimitation (16) being moved in accordance with the movement of the processing device (14) during the processing phase in such a manner that at least one processing product (42) comes to rest outside the workspace (15) during the processing phase,
**characterised in that**
the rear wall (17) of the workspace delimitation (16) is moved in accordance with the movement of the processing device (14) during the processing phase by a carrier (19) of the workspace delimitation (16) on which the rear wall (17) of the workspace delimitation (16) is mounted being moved together with the rear wall (17) of the workspace delimitation (16) in a state decoupled from the processing device (14) and **in that**, owing to the movement of the carrier (19) and the rear wall (17) of the workspace delimitation (16) in a state decoupled from the processing device (14), the extension of the workspace delimitation (16) is changed in accordance with the movement of the processing device (14) and at least one processing product (42) comes to rest outside the workspace (15).

2. Method according to claim 1, **characterised in that** the movement region through which the processing device (14) passes during the processing phase is sub-divided into a plurality of movement part-regions within which the processing device (14) is moved relative to the workpiece(s) (5) to be processed during the processing phase with at least one processing product (42) being produced and **in that**, owing to the movement of the carrier (19) and the rear wall (17) of the workspace delimitation (16) in a state decoupled from the processing device (14), various movement part-regions of the processing device (14) and in each case a specific extension of the workspace delimitation (16) in which at least one processing product (42) comes to rest outside the workspace (15) are associated with each other.

3. Method according to either of the preceding claims, **characterised in that** the processing device (14) is moved during the processing phase in a main movement direction relative to the workpiece(s) (5) to be processed and **in that**, owing to the movement of the carrier (19) and the rear wall (17) of the workspace delimitation (16) in a state decoupled from the processing device (14), the extension of the workspace delimitation (16) is changed during the processing phase in accordance with the movement of the processing device (14) that the processing device (14) carries out in its main movement direction.

4. Method according to any one of the preceding claims, **characterised in that**, owing to the movement of the carrier (19) and the rear wall (17) of the workspace delimitation (16) in a state decoupled from the processing device (14), the extension of the workspace delimitation (16) is changed at the same time as the movement of the processing device (14) that leads to the change in the extension of the workspace delimitation (16).

5. Mechanical arrangement for processing workpieces (5), in particular metal sheets,
• having a processing device (14),
• having a processing drive by means of which the processing device (14) can be moved relative to the workpiece(s) (5) to be processed during a processing phase with the successive production of a plurality of processing products (42),
• having a workspace (15) in which the processing device (14) is arranged during the processing phase and
• having a workspace delimitation (16) which is provided for the workspace (15) and whose extension can be changed during the processing phase in accordance with the movement of the processing device (14) by a rear wall (17) of the workspace delimitation (16) provided as a movable delimitation element of the workspace delimitation (16) being able to be moved during the processing phase by means of a controlled delimitation drive (20) in accordance with the movement of the processing device (14) in such a manner that at least one processing product (42) comes to rest outside the workspace (15) during the processing phase,
**characterised in that** the rear wall (17) of the workspace delimitation (16) is mounted on a carrier (19) of the workspace delimitation (16) that can be moved during the processing phase by means of the delimitation drive (20) together with the rear wall (17) of the workspace delimitation (16) in a state decoupled from the processing device (14) and **in that**, owing to the movement of the carrier (19) and the rear wall (17) of the workspace delimitation (16) in a state decoupled from the processing device (14), the extension of the workspace delimitation (16) can be changed in accordance with the movement of the processing device (14) and at least one processing product (42) comes to rest outside the workspace (15).

6. Mechanical arrangement according to claim 5, **characterised in that** there is provided a mechanical unloading device (41), by means of which processing products (42), which come to rest outside the workspace (15) owing to the movement of the carrier (19) and the rear wall (17) of the workspace delimitation (16) in a state decoupled from the processing device (14), can be received.

7. Mechanical arrangement according to claim 5 or claim 6, **characterised in that** the processing device (14) and at least one movable delimitation element (17, 18) are guided during movement on a common guide (9, 10).

8. Mechanical arrangement according to any one of claims 5 to 7, **characterised in that** a device (31) for delimiting the movement of the processing device (14) is provided, a return movement of the processing device (14) into a region previously released by the workspace delimitation (16) being able to be prevented by means of said device (31).

9. Mechanical arrangement according to any one of claims 5 to 8, **characterised in that** the workspace delimitation (16) forms at least one part of the device (31) for delimiting the movement of the processing device (14).

10. Mechanical arrangement according to any one of claims 5 to 9, **characterised in that** the device (31) for delimiting the movement of the processing device (14) comprises, for detecting the position of the processing device (14), a position detector (32) which is connected to a drive control (29) of the processing drive and **in that** the processing drive can be controlled by the drive control (29) in accordance with the position of the processing device (14) detected by means of the position detector (32) in such a manner that a return movement of the processing device (14) into a region previously released by the workspace delimitation (16) can be prevented.

11. Mechanical arrangement according to any one of claims 5 to 10, **characterised in that** at least one movable delimitation element (17, 18) of the workspace delimitation (16) has a device (26) for protection against collision arranged at the outer side of the workspace (15).

12. Mechanical arrangement according to any one of claims 5 to 11, **characterised in that** there is provided as a processing device (14) a device for thermal workpiece processing, preferably a device for workpiece processing by means of laser radiation, in particular a device for laser cutting workpieces (5).

13. Mechanical arrangement according to any one of claims 5 to 12, **characterised in that** the workspace delimitation (16) forms a device for protection against emissions which emanate from the workspace (15) of the processing device (14).

14. Method for producing a numerical processing program ("programming method") which is provided in order to carry out all the method steps of the method according to any one of claims 1 to 4, with, in accordance with the programming method,
• an assignment of the workpiece(s) (5) to be processed with processing products (42) being defined,
• control commands for controlling the relative movement carried out by the processing device (14) and the workpiece(s) (5) during the processing phase being produced, and
• control commands for controlling the change of the extension of the workspace delimitation (16) during the processing phase being produced,
**characterised in that**
there are produced, as control commands for controlling the change of the extension of the workspace delimitation (16), control commands for controlling the movement of the carrier (19) and the rear wall (17) of the workspace delimitation (16) in a state decoupled from the processing device (14) and
**in that** the production of these control commands and the definition of the assignment of the workpiece(s) (5) to be processed with processing products (42) are carried out in accordance with each other.

15. Method according to claim 14, **characterised in that**, in order to control the change in the extension of the workspace delimitation (16) in accordance with the definition of the assignment of the workpiece(s) (5) to be processed with processing products (42), there are produced control commands owing to which, by the movement of the carrier (19) and the rear wall (17) of the workspace delimitation (16) in a state decoupled from the processing device (14), the extension of the workspace delimitation (16) is changed gradually during the processing phase and, after a gradual change of the extension of the workspace delimitation (16), only completely produced processing products (42) are located outside the workspace (15).

16. Computer program product having program code means which are stored on a machine-readable carrier in order to carry out all the method steps of the method according to any one of claims 1 to 4 when the program is executed on a computer.

17. Computer program product having program code means which are stored on a machine-readable carrier in order to carry out all the method steps of the method according to claim 14 or claim 15 when the program is executed on a computer.

## Revendications

1. Procédé pour usiner des pièces d'oeuvre (5), en particulier des tôles, au moyen d'un ensemble mécanique (1, 40), dans le cadre duquel
- un dispositif d'usinage (14) de l'ensemble mécanique (1, 40) est, pendant une phase d'usinage, déplacé par rapport à la ou aux pièces d'oeuvre (5) à usiner en produisant successivement une pluralité de produits d'usinage (42), et
- pendant la phase d'usinage, le tracé d'une délimitation (16) d'un espace de travail (15) de l'ensemble mécanique (1, 40), espace dans lequel le dispositif d'usinage (14) est disposé pendant la phase d'usinage, est modifié d'une manière adaptée au mouvement du dispositif d'usinage (14), par le fait que, pendant la phase d'usinage, une paroi arrière (17) de la délimitation d'espace de travail (16), paroi prévue comme élément de délimitation mobile de la délimitation d'espace de travail (16), est déplacée d'une manière adaptée au mouvement du dispositif d'usinage (14) de telle sorte que, pendant la phase d'usinage, au moins un produit d'usinage (42) vient se placer à l'extérieur de l'espace de travail (15),
**caractérisé en ce que**
pendant la phase d'usinage, la paroi arrière (17) de la délimitation d'espace de travail (16) est déplacée d'une manière adaptée au mouvement du dispositif d'usinage (14) par le fait qu'un élément porteur (19) de la délimitation d'espace de travail (16), sur lequel est montée la paroi arrière (17) de la délimitation d'espace de travail (16), est déplacé conjointement avec la paroi arrière (17) de la délimitation d'espace de travail (16) d'une manière désaccouplée du dispositif d'usinage (14), et **en ce que**, par le mouvement de l'élément porteur (19) et de la paroi arrière (17) de la délimitation d'espace de travail (16) qui est désaccouplé du dispositif d'usinage (14), le tracé de la délimitation d'espace de travail (16) est modifié d'une manière adaptée au mouvement du dispositif d'usinage (14) et au moins un produit d'usinage (42) vient se placer à l'extérieur de l'espace de travail (15).

2. Procédé selon la revendication 1, **caractérisé en ce que** la course de mouvement parcourue par le dispositif d'usinage (14) pendant la phase d'usinage est divisée en plusieurs courses partielles de mouvement à l'intérieur desquelles le dispositif d'usinage (14), pendant la phase d'usinage, est déplacé par rapport à la ou aux pièces d'oeuvre (5) à usiner en produisant au moins un produit d'usinage (42), et **en ce que**, par le mouvement de l'élément porteur (19) et de la paroi arrière (17) de la délimitation d'espace de travail (16) qui est désaccouplé du dispositif d'usinage (14), différentes courses partielles de mouvement du dispositif d'usinage (14) et un tracé spécifique respectif de la délimitation d'espace de travail (16), selon lequel au moins un produit d'usinage (42) vient se placer à l'extérieur de l'espace de travail (15), sont mutuellement associés.

3. Procédé selon l'une des revendications précédentes, **caractérisé en ce que** pendant la phase d'usinage, le dispositif d'usinage (14) est déplacé dans une direction de déplacement principale par rapport à la ou aux pièces d'oeuvre (5) à usiner, et **en ce que**, par le mouvement de l'élément porteur (19) et de la paroi arrière (17) de la délimitation d'espace de travail (16) qui est désaccouplé du dispositif d'usinage (14), le tracé de la délimitation d'espace de travail (16) est, pendant la phase d'usinage, modifié d'une manière adaptée au mouvement du dispositif d'usinage (14) que le dispositif d'usinage (14) accomplit dans sa direction de déplacement principale.

4. Procédé selon l'une des revendications précédentes, **caractérisé en ce que**, par le mouvement de l'élément porteur (19) et de la paroi arrière (17) de la délimitation d'espace de travail (16) qui est désaccouplé du dispositif d'usinage (14), le tracé de la délimitation d'espace de travail (16) est modifié en même temps que le mouvement du dispositif d'usinage (14) qui engendre la modification du tracé de la délimitation d'espace de travail (16).

5. Ensemble mécanique pour usiner des pièces d'oeuvre (5), en particulier des tôles,
- avec un dispositif d'usinage (14),
- avec un entraînement d'usinage, au moyen duquel le dispositif d'usinage (14) est, pendant une phase d'usinage, déplacé par rapport à la ou aux pièces d'oeuvre (5) à usiner en produisant successivement une pluralité de produits d'usinage (42),
- avec un espace de travail (15), dans lequel le dispositif d'usinage (14) est disposé pendant la phase d'usinage, et
- avec une délimitation d'espace de travail (16) prévue pour l'espace de travail (15), délimitation dont le tracé peut, pendant la phase d'usinage, être modifié d'une manière adaptée au mouvement du dispositif d'usinage (14), par le fait que, pendant la phase d'usinage, une paroi arrière (17) de la délimitation d'espace de travail (16), paroi prévue comme élément de délimitation mobile de la délimitation d'espace de travail (16), peut, au moyen d'un entraînement de délimitation commandé (20), être déplacée d'une manière adaptée au mouvement du dispositif d'usinage (14) de telle sorte que, pendant la phase d'usinage, au moins un produit d'usinage (42) vient se placer à l'extérieur de l'espace de travail (15),
**caractérisé en ce que**
la paroi arrière (17) de la délimitation d'espace de travail (16) est montée sur un élément porteur (19) de la délimitation d'espace de travail (16) qui, pendant la phase d'usinage,
au moyen de l'entraînement de délimitation (20), peut être déplacé conjointement avec la paroi arrière (17) de la délimitation d'espace de travail (16) d'une manière désaccouplée du dispositif d'usinage (14), et **en ce que**, par le mouvement de l'élément porteur (19) et de la paroi arrière (17) de la délimitation d'espace de travail (16) qui est désaccouplé du dispositif d'usinage (14), le tracé de la délimitation d'espace de travail (16) peut être modifié d'une manière adaptée au mouvement du dispositif d'usinage (14) et au moins un produit d'usinage (42) vient se placer à l'extérieur de l'espace de travail (15).

6. Ensemble mécanique selon la revendication 5, **caractérisé en ce qu'**il est prévu un dispositif de déchargement mécanique (41) qui permet de prendre en charge des produits d'usinage (42) qui viennent se placer à l'extérieur de l'espace de travail (15) en raison du mouvement de l'élément porteur (19) et de la paroi arrière (17) de la délimitation d'espace de travail (16) qui est désaccouplé du dispositif d'usinage (14).

7. Ensemble mécanique selon la revendication 5 ou 6, **caractérisé en ce que** le dispositif d'usinage (14) et au moins un élément de délimitation mobile (17, 18) sont guidés sur un guide commun (9, 10) lors des déplacements.

8. Ensemble mécanique selon l'une des revendications 5 à 7, **caractérisé en ce qu'**il est prévu un dispositif (31) pour limiter le mouvement du dispositif d'usinage (14), sachant qu'au moyen du dispositif précité (31), on peut empêcher un mouvement de rappel du dispositif d'usinage (14) dans une zone préalablement libérée par la délimitation d'espace de travail (16).

9. Ensemble mécanique selon l'une des revendications 5 à 8, **caractérisé en ce que** la délimitation d'espace de travail (16) forme au moins une partie du dispositif (31) pour limiter le mouvement du dispositif d'usinage (14).

10. Ensemble mécanique selon l'une des revendications 5 à 9, **caractérisé en ce que** le dispositif (31) pour limiter le mouvement du dispositif d'usinage (14) comprend un détecteur de position (32) pour détecter la position du dispositif d'usinage (14), détecteur qui est relié à une commande d'entraînement (29) de l'entraînement d'usinage, et **en ce que** l'entraînement d'usinage peut, par la commande d'entraînement (29), être commandé en fonction de la position du dispositif d'usinage (14) détectée au moyen du détecteur de position (32) de telle sorte qu'on peut empêcher un mouvement de rappel du dispositif d'usinage (14) dans une zone préalablement libérée par la délimitation d'espace de travail (16).

11. Ensemble mécanique selon l'une des revendications 5 à 10, **caractérisé en ce qu'**au moins un élément de délimitation mobile (17, 18) de la délimitation d'espace de travail (16) présente un dispositif (26) de protection contre les collisions qui est disposé sur le côté extérieur de l'espace de travail (15).

12. Ensemble mécanique selon l'une des revendications 5 à 11, **caractérisé en ce qu'**il est prévu comme dispositif d'usinage (14) un dispositif pour l'usinage thermique de pièces d'oeuvre, de préférence un dispositif pour l'usinage de pièces d'oeuvre par rayonnement laser, en particulier un dispositif pour le découpage de pièces d'oeuvre (5) au laser.

13. Ensemble mécanique selon l'une des revendications 5 à 12, **caractérisé en ce que** la délimitation d'espace de travail (16) forme un dispositif de protection contre les émissions qui proviennent de l'espace de travail (15) du dispositif d'usinage (14).

14. Procédé pour générer un programme d'usinage numérique (« procédé de programmation »), qui est prévu pour la mise en oeuvre de toutes les étapes du procédé selon l'une des revendications 1 à 4, sachant que dans le cadre du procédé de programmation
- on définit une occupation en produits d'usinage (42) de la ou des pièces d'oeuvre (5) à usiner,
- on crée des instructions de commande pour commander le mouvement relatif accompli par le dispositif d'usinage (14) et la ou les pièces d'oeuvre (5) pendant la phase d'usinage, et
- on crée des instructions de commande pour commander la modification du tracé de la délimitation d'espace de travail (16) pendant la phase d'usinage,
**caractérisé**
**en ce que**, comme instructions de commande pour commander la modification du tracé de la délimitation d'espace de travail (16), on crée des instructions de commande pour commander le mouvement de l'élément porteur (19) et de la paroi arrière (17) de la délimitation d'espace de travail (16) qui est désaccouplé du dispositif d'usinage (14),
et **en ce que** la création de ces instructions de commande et la définition de l'occupation en produits d'usinage (42) de la ou des pièces d'oeuvre (5) à usiner sont mutuellement adaptées.

15. Procédé selon la revendication 14, **caractérisé en ce que**, pour commander la modification du tracé de la délimitation d'espace de travail (16) d'une manière adaptée à la définition de l'occupation en produits d'usinage (42) de la ou des pièces d'oeuvre (5) à usiner, on crée des instructions de commande sur la base desquelles, par le mouvement de l'élément porteur (19) et de la paroi arrière (17) de la délimitation d'espace de travail (16) qui est désaccouplé du dispositif d'usinage (14), le tracé de la délimitation d'espace de travail (16) est progressivement modifié pendant la phase d'usinage et, à la suite d'une modification progressive du tracé de la délimitation d'espace de travail (16), seuls des produits d'usinage (42) totalement réalisés se trouvent en dehors de l'espace de travail (15).

16. Produit-programme informatique avec des moyens de codage de programme enregistrés sur un support lisible par machine, pour exécuter toutes les étapes du procédé selon l'une des revendications 1 à 4 lorsqu'on fait fonctionner le programme sur un ordinateur.

17. Produit-programme informatique avec des moyens de codage de programme enregistrés sur un support lisible par machine, pour exécuter toutes les étapes du procédé selon la revendication 14 ou 15 lorsqu'on fait fonctionner le programme sur un ordinateur.
